Europäisches Patentamt

(19) European Patent Office

Office européen des brevets

(11) Numéro de publication: **0 021 955**
A1

(12) **DEMANDE DE BREVET EUROPEEN**

(21) Numéro de dépôt: **80400849.8**

(22) Date de dépôt: **11.06.80**

(51) Int. Cl.³: **G 06 F 15/40**
**G 06 K 9/72**

(30) Priorité: **11.06.79 FR 7915753**

(43) Date de publication de la demande:
**07.01.81 Bulletin 81/1**

(84) Etats Contractants Désignés:
**DE GB NL SE**

(71) Demandeur: **INRIA INSTITUT NATIONAL DE RECHERCHE EN INFORMATIQUE ET EN AUTOMATIQUE Domaine de Voluceau**
**Rocquencourt F-78150 Le Chesnay(FR)**

(72) Inventeur: **Tusera, Dimitri**
**8, rue Gaston Monmousseau Guyancourt**
**F-78000 Versailles(FR)**

(72) Inventeur: **Hyafil, Laurent**
**66, boulevard Senard**
**F-92210 Saint Cloud(FR)**

(74) Mandataire: **Netter, André**
**40, rue Vignon**
**F-75009 Paris(FR)**

(54) **Procédé et appareil informatique de reconnaissance des mots.**

(57) Procédé informatique numérique pour la reconnaissance de mots d'un texte par comparaison numérique, caractère par caractère, avec un mot-modèle dans lequel la comparaison d'un caractère ($a'_3$) du mot avec le caractère ($a_3$) de même rang du mot-modèle est accompagné de la comparaison du caractère ($a_2$) précédent du mot et de la comparaison du caractère ($a_4$) suivant du mot avec ledit caractère du mot-modèle.
Appareil pour la mise en oeuvre de ce procédé.

Fig.1

1

# PROCEDE ET APPAREIL INFORMATIQUE
## DE RECONNAISSANCE DES MOTS

L'invention a pour objet un procédé et un appareil informatique pour la reconnaissance des mots.

Dans les ensembles informatiques pour la reconnaissance des mots, on compare les divers caractères ou lettres d'un mot en succession aux divers caractères d'un mot modèle et le mot est reconnu s'il y a, à chaque comparaison, identité entre les caractères comparés.

Ce procédé est clairement inefficace lorsque le mot qu'il s'agit de reconnaître comporte une faute d'orthographe. Or, il est rare qu'un texte courant ne comprenne pas de mots comportant de telles fautes. La mise en oeuvre du procédé et des appareils connus fournit donc des résultats très imparfaits dans l'analyse de ces textes.

L'invention comble cette lacune. Elle est caractérisée par ce fait qu'à chaque comparaison un caractère d'un mot à reconnaître est comparé non pas seulement au caractère de même rang du mot-modèle mais simultanément au caractère précédent et au caractère suivant.

L'invention prévoit également que le résultat de la comparaison d'un caractère du mot avec un caractère de rang différent du mot modèle n'est pris en compte qu'à

2

l'apparition d'une discordance entre des caractères de même rang du mot et du mot-modèle.

On peut ainsi éviter la non-reconnaissance d'un mot en raison de la présence d'une faute d'orthographe tout en assurant l'exactitude de la reconnaissance, c'est-à-dire ne retenant pas les mots qui ne correspondent pas au mot-modèle.

L'invention vise également un appareil pour la mise en oeuvre du procédé, caractérisé en ce qu'il comprend un dispositif de comparaison comportant, en outre d'un comparateur recevant sur ses entrées des informations correspondant aux caractères de même rang du mot en cours d'examen et du mot-modèle, au moins un autre comparateur qui, lorsqu'une entrée reçoit un signal correspondant au caractère d'un rang déterminé du mot examiné, reçoit sur son autre entrée un signal correspondant au caractère du mot-modèle d'un rang différent.

Il est ainsi permis, au cours de l'analyse d'un texte, d'admettre pour vrai un mot qui présente par rapport au mot-modèle un écart syntaxique prédéterminé.

On peut de cette manière, suivant les nécessités, admettre un mot présentant une faute d'orthographe ou deux fautes d'orthographe ou bien présentant une transposition différente par rapport au mot-modèle.

Dans la description qui suit, faite à titre d'exemple, on se réfère aux dessins annexés, dans lesquels :

la figure 1 est un schéma d'un appareil selon l'invention ;

la figure 2 est un tableau ;

la figure 3 est un schéma explicatif ;

la figure 4 est un autre tableau ;

la figure 5 est un autre schéma explicatif ;

la figure 6 est un troisième tableau ;

la figure 7 est un schéma explicatif.

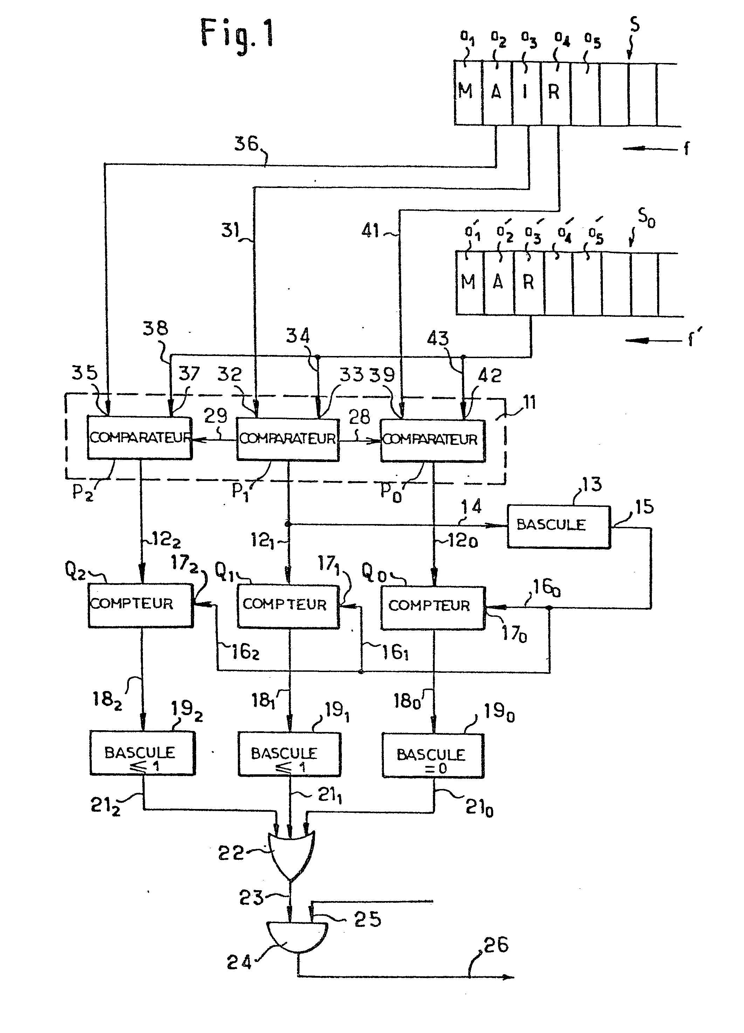

Dans la forme de réalisation prévue pour la reconnaissance d'un mot par comparaison avec un mot-modèle, en admettant une seule faute d'orthographe, les divers caractères du mot, introduits dans une mémoire S (figure 1), du type FIFO (First In First Out), dans les cases $a_1$, $a_2$, etc., dans le sens de la flèche $\underline{f}$, sont, en succession, comparés avec les caractères de même rang d'un mot-modèle dont les caractères ou lettres sont introduits dans une mémoire $S_O$, également du type FIFO, respectivement dans les cases $a'_1$, $a'_2$, $a'_3$, etc.

L'appareil comprend un dispositif de comparaison 11 à trois comparateurs $P_O$, $P_1$, $P_2$. Chacun des comparateurs est relié par un circuit, respectivement $12_O$, $12_1$, $12_2$, à un compteur correspondant, respectivement $Q_O$, $Q_1$, $Q_2$. Une bascule électronique 13 est reliée par un conducteur 14 au circuit $12_1$ et sa sortie 15 est reliée par des conducteurs $16_O$, $16_1$, $16_2$ à des entrées de déblocage, respectivement $17_O$, $17_1$, $17_2$, des compteurs $Q_O$, $Q_1$ et $Q_2$.

Lesdits compteurs sont reliés par des conducteurs $18_O$, $18_1$, $18_2$, à des bascules, respectivement $19_O$, $19_1$, $19_2$ dont les sorties $21_O$, $21_1$, $21_2$ prennent un état ou l'autre suivant que la valeur appliquée à leur entrée 18 est inférieure ou égale à une valeur prédéterminée. Les sorties 21 sont reliées à un dispositif de logique 22 dont la sortie 23 est appliquée à l'entrée d'une porte 24 dont l'ouverture est commandée par l'autre entrée 25, l'information fournie par l'appareil étant présente à la sortie 26 de la porte 24.

Le fonctionnement de l'appareil est décrit ci-après sur la base d'un exemple.

Il s'agit de reconnaître si un texte contient le mot MARTIN. Les différentes lettres dudit mot sont présentes dans les cases $a'_1$, .....$a'_5$ de la mémoire $S_O$. On suppose également que le mot à reconnaître présente, par suite d'une erreur, une lettre de plus que le mot MARTIN et qu'il est écrit par exemple MAIRTIN.

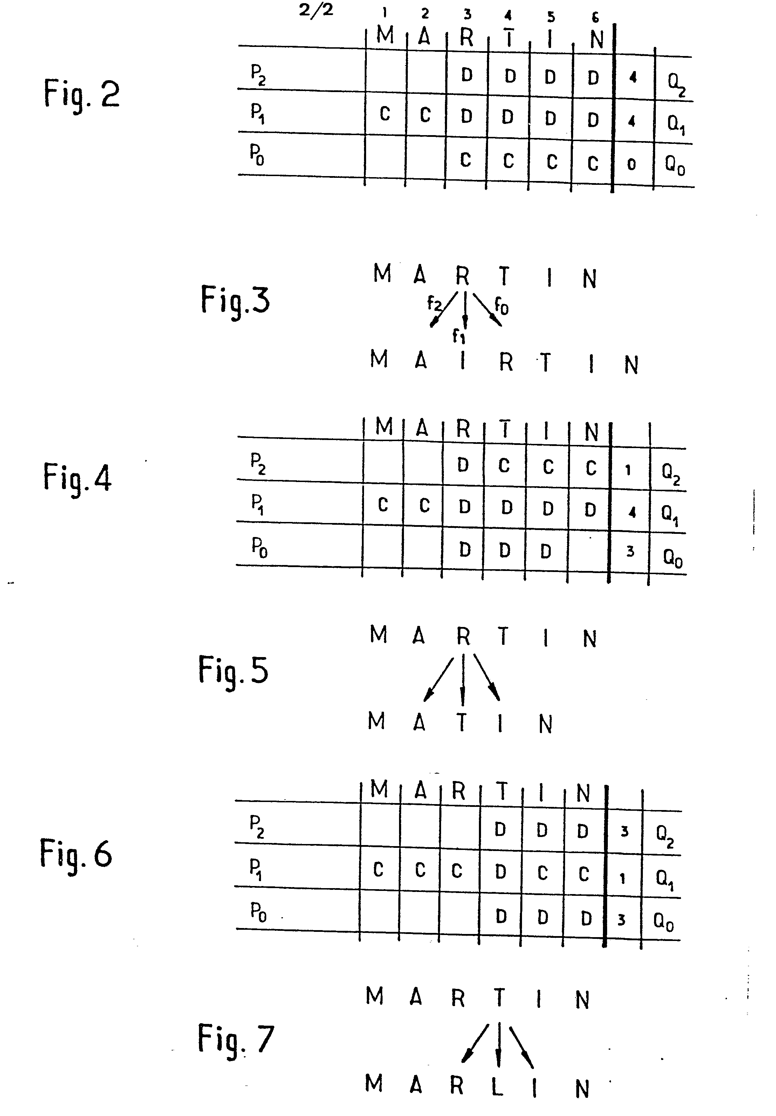

Dans un premier temps, la première lettre, à savoir M, du mot contenu sous forme numérique binaire dans la case $a_1$ de la mémoire S est comparée à la première lettre, à savoir $M_1$, contenue sous forme numérique binaire dans la case $a'_1$ de la mémoire $S_O$ et cela dans le comparateur $P_1$. Le résultat de la concordance a été symbolisé dans le tableau de la figure 2, sur la rangée horizontale médiane correspondant audit comparateur et dans la première colonne correspondant à la première lettre M du mot-modèle, et cela par la lettre C, initiale de "concordance". Lorsque cette concordance est constatée, d'une part le compteur $Q_1$ n'est pas avancé ; d'autre part, les comparateurs $P_0$ et $P_2$ restent inopératoires.

Il en est de même lors de la comparaison du second caractère A contenu dans la case $a_2$ de la mémoire S avec le second caractère A contenu dans la case $a_2$ de la mémoire $S_0$, comme à nouveau schématisé par la lettre C dans la rangée horizontale médiane du tableau de la figure 2 et dans la seconde colonne correspondant à la lettre A.

Par contre, au temps suivant, la troisième lettre du mot du texte est la lettre I, dont la figuration numérique est introduite par le conducteur 31 (figure 18) à la première entrée 32 du comparateur $P_1$ alors qu'à son autre entrée, 33, ce dernier reçoit par le conducteur 34 le signal correspondant à la lettre R. Le résultat de la comparaison, différent de celui des deux premiers temps, rend opératoires, par les circuits 28 et 29, les deux autres comparateurs $P_0$ et $P_2$. Le comparateur $P_2$ reçoit, en ce temps, à son entrée 35, par le conducteur 36, le signal correspondant au caractère précédent, à savoir celui contenu dans la case $a_2$ du mot contenu dans la mémoire S, et qui est "A", et par son entrée 37, grâce au conducteur 38, le même signal que celui appliqué sur l'entrée 33 du comparateur $P_1$, à savoir correspondant à la lettre R. En ce temps, également, l'entrée 39 du comparateur $P_0$ reçoit, par le conducteur 41, le signal correspondant au caractère qui suit dans la mémoire S, à savoir celui contenu dans la case $a_4$, donc représentatif de "R", l'autre entrée 42 recevant par le conducteur 43 le signal correspondant à la lettre "R" du mot-modèle.

Cette condition est schématisée par les trois flèches $f_1$, $f_2$, $f_0$ de la représentation de la figure 3, où ont été écrits, l'un au-dessus de l'autre, les caractères successifs respectivement alignés verticalement, d'une part, du mot-modèle et, d'autre part, au mot du texte contenant la faute d'orthographe.

Dans la troisième colonne du tableau de la figure 2, à savoir celle sous-jacente à la lettre R, le résultat de la comparaison est schématisé par la lettre C, abréviation de "concordance", pour le comparateur $P_0$, où il y a concordance, et par la lettre D, abréviation de "discordance" pour les deux autres comparateurs $P_1$ et $P_2$, où il y a discordance.

Les résultats des comparaisons pour le temps suivant sont montrés dans la quatrième colonne du tableau de la figure 2, à savoir D, D, C, respectivement pour les comparateurs $P_2$, $P_1$, $P_0$.

Au temps suivant, les résultats sont montrés dans la cinquième colonne, à savoir à nouveau D, D, C.

Au dernier temps, qui correspond à la dernière lettre du mot-modèle, les résultats sont montrés dans la sixième colonne, à savoir D, D, C.

Pour ces quatre derniers temps, le signal présent à la sortie $12_1$ du comparateur $P_1$ fait basculer la bascule 13, ce qui débloque, par les conducteurs $16_0$, $16_1$, $16_2$, les divers compteurs $Q_0$, $Q_1$, $Q_2$. On a porté dans la dernière colonne du tableau de la figure 2, en face de chaque compteur, le nombre de discordances, qui sont respectivement, pour le comparateur $P_2$ de quatre, pour le comparateur $P_1$ de quatre, et pour le comparateur $P_0$, de zéro. Les compteurs Q comptent les discordances, de sorte qu'à la fin de la comparaison, le compteur $Q_2$ a compté "quatre", le compteur $Q_1$ "quatre", et le compteur $Q_0$ "zéro".

Un autre type de faute d'orthographe qui peut affecter le mot à reconnaître est l'omission d'une lettre. C'est cette situation qui est considérée dans les figures 4 et 5, analogues respectivement aux figures 2 et 3.

On constate qu'après l'analyse complète du mot, les compteurs $Q_2$, $Q_1$, $Q_0$ marquent respectivement 1, 4, 3.

Un troisième type de faute d'orthographe est le remplacement d'une lettre par une autre lettre. Cette condition fait l'objet des figures 6 et 7 analogues respectivement aux figures 2 et 4 et aux figures 3 et 5.

Dans un tel cas, les compteurs $Q_2$, $Q_1$ et $Q_0$

marquent respectivement 3, 1 et 3.

Dans le premier cas, comme montré sur la figure 2, le compteur $Q_0$ est à 0.

Dans le second cas, comme montré sur le tableau de la figure 4, le compteur $Q_2$ est à 1.

Dans le troisième cas, comme montré sur le tableau de la figure 6, c'est le compteur $Q_1$ qui est à 1.

De ce qui précède, on conclut que le mot analysé contient une faute d'orthographe au plus si le compteur $Q_0$ est à 0, ou bien si le compteur $Q_1$ est à 1 ou à 0, ou bien si le compteur $Q_2$ est à 1 ou à 0, ce qui a été schématisé par les indications : = 0, 1, 1, portées respectivement à l'intérieur des rectangles $19_0$, $19_1$ et $19_2$ représentatifs des bascules $19_0$, $19_1$, $19_2$.

La vérification que l'une ou l'autre de ces conditions est remplie est fournie par le dispositif de logique 22.

A l'apparition d'un signal de fin de mot appliqué à l'entrée 25 de la porte 24, le signal de reconnaissance du mot apparaît ainsi à la sortie 26 de la porte 24, non seulement si le mot examiné est identique au mot-modèle, mais également s'il contient une seule faute d'orthographe.

L'appareil permet également de reconnaître comme vrai, non seulement un mot contenant une seule faute d'orthographe, mais aussi un mot contenant deux fautes d'ortographe, à condition que la deuxième faute d'orthographe consiste en la permutation de deux lettres du mot. Il suffit alors de charger les dispositifs $19_2$, $19_1$, $19_0$, non pas de 1, 1 et 0 comme dans la forme de réalisation précédente, mais de 2, 2 et 1.

REVENDICATIONS

1. Procédé informatique numérique pour la reconnaissance de mots d'un texte par comparaison numérique, caractère par caractère, avec un mot-modèle, caractérisé en ce que la comparaison d'un caractère du mot avec le caractère de même rang du mot-modèle est accompagné de la comparaison du caractère précédent du mot de la comparaison du caractère suivant du mot avec ledit caractère du mot-modèle.

2. Procédé selon la revendication 1, caractérisé en ce qu'une comparaison d'accompagnement n'a lieu qu'à l'apparition d'une discordance dans la comparaison des caractères de même rang.

3. Procédé selon la revendication 2, caractérisé en ce qu'on compte le nombre des discordances des comparaisons et en ce qu'on ne retient un mot pour vrai que si, après la comparaison avec le dernier des caractères du mot-modèle, on obtient un résultat qui est 0 ou 1.

4. Appareil pour la mise en oeuvre du procédé selon l'une des revendications précédentes, caractérisé en ce qu'il comprend un dispositif de comparaison comprenant trois comparateurs dont l'un est affecté à la comparaison des caractères de même rang, d'une part du mot à analyser et, d'autre part, du mot-modèle, un autre est affecté à la comparaison d'un caractère d'un rang déterminé du mot-modèle avec le caractère du rang précédent du mot à analyser et un troisième est affecté à la comparaison d'un caractère du mot-modèle avec le caractère du rang suivant du mot à analyser.

5. Appareil selon la revendication 4, caractérisé en ce que le dispositif de comparaison est suivi par un dispositif de comptage comprenant trois compteurs reliés respectivement aux trois comparateurs.

6. Appareil selon la revendication 5, caractérisé en ce qu'au dispositif de comptage est adjoint un dispositif de déblocage rendu opératoire à partir du comparateur correspondant à la comparaison des caractères de même rang lorsque la comparaison révèle une discordance.

7. Appareil selon la revendication 5, caractérisé en ce que chacun des compteurs est suivi d'une bascule.

2

0021955

8. Appareil selon la revendication 7, caractérisé en ce que chacune des bascules peut être chargée différemment.

9. Appareil selon la revendication 8, caractérisé en ce que les bascules sont chargées respectivement, pour celles qui correspondent à la comparaison des caractères de même rang, par 0, et pour les deux autres par 1.

10. Appareil selon la revendication 6, caractérisé en ce que le dispositif de comptage est relié à un dispositif logique rendu opératoire par un signal de fin de mot-modèle.

11. Appareil selon la revendication 10, caractérisé en ce que le dispositif logique est relié aux trois bascules.

12. Appareil selon l'une des revendications 7 à 11, caractérisé en ce que les bascules sont chargées respectivement par un, deux, et deux, permettant de retenir non seulement un mot présentant une faute d'orthographe mais un mot présentant deux fautes d'orthographe dont la seconde serait l'interversion du rang de deux caractères.

Fig.1

Fig. 2

| | 1 M | 2 A | 3 R | 4 T | 5 I | 6 N | | |
|---|---|---|---|---|---|---|---|---|
| $P_2$ | | | D | D | D | D | 4 | $Q_2$ |
| $P_1$ | C | C | D | D | D | D | 4 | $Q_1$ |
| $P_0$ | | | C | C | C | C | 0 | $Q_0$ |

Fig. 3

M A R T I N

$f_2$  $f_1$  $f_0$

M A I R T I N

Fig. 4

| | M | A | R | T | I | N | | |
|---|---|---|---|---|---|---|---|---|
| $P_2$ | | | D | C | C | C | 1 | $Q_2$ |
| $P_1$ | C | C | D | D | D | D | 4 | $Q_1$ |
| $P_0$ | | | D | D | D | | 3 | $Q_0$ |

Fig. 5

M A R T I N

M A T I N

Fig. 6

| | M | A | R | T | I | N | | |
|---|---|---|---|---|---|---|---|---|
| $P_2$ | | | | D | D | D | 3 | $Q_2$ |
| $P_1$ | C | C | C | D | C | C | 1 | $Q_1$ |
| $P_0$ | | | | D | D | D | 3 | $Q_0$ |

Fig. 7

M A R T I N

M A R L I N

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée |
|---|---|---|
| X | COMMUNICATIONS OF THE ACM, vol. 7, no. 3, Mars 1964, pages 171-176 New York, U.S.A. F.I. DAMERAU: "A technique for computer detection and correction of spelling errors" <br><br> * Page 172, colonne de gauche, ligne 46 - page 175, colonne de gauche, ligne 4; figure 3 * <br><br> -- | 1-4 |
| | IBM TECHNICAL DISCLOSURE BULLETIN, vol. 18, no. 11, avril 1976, pages 3835-3836 New York, U.S.A. T.C. CHISNELL et al.: "Ping processor: position invariant n-grams for word verification and error correction" <br><br> * En entier * <br><br> ---- | 4 |

**CLASSEMENT DE LA DEMANDE (Int. Cl. 3)**

G 06 F 15/40
G 06 K 9/72

**DOMAINES TECHNIQUES RECHERCHES (Int. Cl. 3)**

G 06 F 7/28
15/20
15/38
15/40
G 06 K 9/72

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-09-1980 | HARRIS |

OEB Form 1503.1  06.78